# EUROPÄISCHE PATENTSCHRIFT

(11) **EP 3 829 802 B1**
(45) Veröffentlichungstag und Bekanntmachung des Hinweises auf die Patenterteilung: **19.02.2025**
(21) Anmeldenummer: 19739852.2
(22) Anmeldetag: 27.06.2019
(51) Int. Cl.: B23B 27/10, B23Q 11/10

(54) **DREHWERKZEUG-SYSTEM MIT EINEM DREHWERKZEUG-HALTER**
ROTARY TOOL SYSTEM WITH A ROTARY TOOL HOLDER
SYSTÈME D'OUTILS DE TOURNAGE AVEC SUPPORT D'OUTIL DE TOURNAGE

(30) Priorität: 01.08.2018 AT 15518 U
(43) Veröffentlichungstag der Anmeldung: 09.06.2021
(73) Patentinhaber: Ceratizit Austria Gesellschaft m.b.H., 6600 Reutte (AT)
(72) Erfinder: SENZENBERGER, Martin, 6600 Reutte (AT); VENTURINI, Remus, 6600 Reutte (AT); GÖBERL, Christian, 6600 Reutte (AT)
(74) Vertreter: Ciesla, Dirk
(86) Internationale Anmeldenummer: PCT/AT2019/060210
(87) Internationale Veröffentlichungsnummer: WO 2020/023985

(56) Entgegenhaltungen:
- EP-A1- 3 112 063
- EP-A1- 3 219 421
- DE-A1- 2 234 389
- JP-A- H07 266 104
- US-A- 4 848 198
- US-A- 5 340 242
- US-A1- 2013 220 089
- US-A1- 2014 270 999
- US-B1- 6 471 448

## Beschreibung

Die vorliegende Erfindung betrifft ein Drehwerkzeug-System mit einem Drehwerkzeug-Halter.

Bei der zerspanenden Bearbeitung von Werkstücken kommen verschiedene Verfahren zum Einsatz, von denen eine Bearbeitung durch Drehen zu den kommerziell wichtigsten gehört. Insbesondere bei der Zerspanung von metallischen Werkstoffen ist dabei ein Trend zu immer komplexeren Bearbeitungsoperationen und zu immer höheren Bearbeitungsgeschwindigkeiten zu beobachten, mit dem erhöhte Anforderungen an die Kühlung des verwendeten Drehwerkzeugs einhergehen. Ferner kommen auch vermehrt schwerer zu zerspanende Materialien zum Einsatz, die ebenfalls höhere Anforderungen an die Kühlung des Drehwerkzeugs stellen.

Bei der Drehbearbeitung kommen häufig Drehwerkzeuge zum Einsatz, bei denen die mit dem zu zerspanenden Material in Eingriff gelangende Schneide an einem auswechselbaren Schneideinsatz aus einem besonders harten und verschleißbeständigen Material, wie insbesondere Hartmetall (cemented carbide), Cermet oder einer Schneidkeramik, realisiert ist, der an einem Sitz an einem Drehwerkzeug-Halter aus einem zäheren Material, wie z.B. Stahl, befestigt ist. Neben einer seit langem etablierten Technik, bei der Kühlmittel über separat zu dem Drehwerkzeug ausgebildete Kühlmittelschläuche und -düsen in den Bereich der Schneiden zugeführt wird, kommen seit einigen Jahren vermehrt Drehwerkzeuge zum Einsatz, bei denen eine innere Kühlmittelführung realisiert ist, die zumindest einen Kühlmittelkanal aufweist, der durch das Innere des Drehwerkzeug-Halters verläuft. In dem vorliegenden Kontext wird unter dem Begriff Düse dabei eine Struktur verstanden die einen Austritt eines gerichteten Strahls ermöglicht, ohne dass diese Struktur zwingend eine fokussierende oder strömungsgeschwindigkeitserhöhende Ausgestaltung haben muss.

Bei der Realisierung einer inneren Kühlmittelführung in einem Drehwerkzeug-Halter tritt in der Praxis häufig das Problem auf, dass die Düsen, aus denen das Kühlmittel gerichtet auf den Bereich der Schneide austritt, einem starken Verschleiß durch die bei der Drehbearbeitung erzeugten Späne ausgesetzt sind. Insbesondere bei Drehwerkzeug-Haltern, die für verschiedene Drehbearbeitungen eingesetzt werden oder unter verschiedenen Betriebsparametern eingesetzt werden, tritt ferner häufig das Problem auf, dass die Düsen einen ungehinderten Abfluss der bei der Drehbearbeitung erzeugten Späne behindern.

US 5,340,242 A beschreibt ein Drehwerkzeug-System nach dem Oberbegriff von Anspruch 1.

EP 3 219 421 A1 beschreibt einen Werkzeughalter mit Fluid-Zufuhrkanälen für überkritisches CO₂.

Es ist Aufgabe der vorliegenden Erfindung, ein Drehwerkzeug-System bereitzustellen, das kostengünstig in der Herstellung ist, eine zielgerichtete Kühlmittelzufuhr in den Bereich der Schneide ermöglicht, robust und unempfindlich gegenüber den Bedingungen bei der Drehbearbeitung ist und bevorzugt auch eine Verwendung einer sogenannten Minimalmengenschmierung (MMS) ermöglicht.

Die Aufgabe wir durch ein Drehwerkzeug-System nach Anspruch 1 gelöst. Vorteilhafte Weiterbildungen sind in den abhängigen Ansprüchen angegeben.

Da der Düsenkörper auswechselbar ausgebildet ist, kann dieser im Fall eines Verschleißes in einfacher und kostengünstiger Weise ersetzt werden. In dem Fall, dass der Düsenkörper bei der konkret beabsichtigten Drehbearbeitung räumlich im Weg sein sollte, kann dieser ferner entfernt und gegebenenfalls durch einen Blindstopfen ersetzt werden. Da sich der innere Kühlmittelkanal durch den Schaftabschnitt und den dazu abgewinkelten Düsenaustrittsbereich, die bevorzugt einstückig bzw. monolithisch ausgebildet sein können, erstreckt, ist eine besonders kompakte Ausgestaltung ermöglicht. Ferner kann der innere Kühlmittelkanal in dieser Weise ohne starke Veränderungen des Strömungsquerschnitts ausgebildet werden, wodurch ein unerwünschter Druckabfall und eine unerwünschte Entmischung des Kühlmittels vermieden werden können. Da die Befestigung des Düsenkörpers an dem Bearbeitungsabschnitt über das in dem Drehwerkzeug-Halter angeordnete Klemmelement erfolgt, das sich quer zu der Längsachse des Schaftabschnitts erstreckt, ist der Befestigungsmechanismus gut gegenüber sowohl Spänen als auch dem verwendeten Kühlmittel geschützt. Verglichen mit einer Ausgestaltung, bei der z.B. der Schaftabschnitt mit einem Außengewinde versehen würde, das direkt mit einem Innengewinde in der Bohrung zusammenwirkt, kann die Befestigung des Düsenkörpers ferner sehr schnell erfolgen und der von der Oberfläche des Bearbeitungsabschnitts vorspringende Teil des Düsenkörpers braucht nicht mit störenden Angriffsflächen für ein Schraubwerkzeug versehen zu werden.

Gemäß einer Weiterbildung ist das Klemmelement in einer mit der Bohrung kommunizierend verbundenen Querbohrung angeordnet. In diesem Fall ist eine besonders gut geschützte und kompakte Anordnung des Befestigungsmechanismus realisiert. Die Querbohrung kann sich dabei z.B. insbesondere im Wesentlichen senkrecht zu der Bohrung erstrecken.

Gemäß einer Weiterbildung ist die Querbohrung eine Gewindebohrung mit einem Innengewinde, das mit einem Außengewinde an dem Klemmelement zusammenwirkt. In diesem Fall kann der Düsenkörper besonders schnell und zuverlässig an dem Bearbeitungsabschnitt befestigt werden. Wenn das Klemmelement als eine Madenschraube (also eine Schraube ohne seitlich vorspringenden Schraubenkopf) ausgebildet wird, wird eine besonders kompakte Realisierung des Befestigungsmechanismus erzielt.

Gemäß einer Weiterbildung ist die Ausnehmung eine ringförmig an dem Schaftbereich umlaufende Rille. In diesem Fall kann die Ausnehmung in besonders einfacher und kostengünstiger Weise durch eine Drehbearbeitung bei der Herstellung des Düsenkörpers erzeugt werden.

Gemäß einer Weiterbildung weist die Ausnehmung eine schräg zu einer Längsachse des Schaftbereichs verlaufende Klemmfläche auf, auf die eine Haltefläche des Klemmelements keilförmig einwirkt, sodass der Düsenkörper gegen die Oberfläche des Bearbeitungsabschnittes gespannt ist. In diesem Fall ist der Düsenkörper besonders zuverlässig unter Ausnutzung des Prinzips der schiefen Ebene an dem Bearbeitungsabschnitt befestigt und der Befestigungsmechanismus ist gegenüber Fertigungstoleranzen sehr unempfindlich. Die Klemmfläche kann insbesondere bevorzugt unter einem Winkel zwischen 20° und 70° zu der Längsachse des Schaftabschnitts verlaufen, bevorzugt zwischen 35° und 55°.

Gemäß einer Weiterbildung ist an der Oberfläche des Bearbeitungsabschnittes ein erstes Verdrehsicherungselement angeordnet, das mit einem zweiten Verdrehsicherungselement an einer Unterseite des Düsenaustrittsbereichs zum Verhindern einer Drehung des Düsenkörpers um eine Längsachse des Schaftbereichs zusammenwirkt. In diesem Fall ist in besonders einfacher und kostengünstiger Weise sichergestellt, dass der austretende Kühlmittelstrahl zuverlässig auf den beabsichtigten Bereich des Schneideinsatzes gerichtet ist.

Wenn das erste Verdrehsicherungselement ein Vorsprung ist und das zweite Verdrehsicherung eine Vertiefung in der Unterseite des Düsenaustrittsbereichs, ist eine besonders einfache und kostengünstige Fertigung auch des Verdrehsicherungsmechanismus ermöglicht. Insbesondere kann das zweite Verdrehsicherungselement durch einen Stift gebildet sein, der in einer sich von der Oberfläche des Bearbeitungsabschnitts erstreckenden weiteren Bohrung angeordnet ist, was eine besonders schnelle und kostengünstige Herstellung des Drehwerkzeug-Halters ermöglicht. Der Stift kann dabei z.B. einfach in die weitere Bohrung eingepresst sein oder mit einem Außengewinde versehen werden, dass mit einem Innengewinde in der weiteren Bohrung zusammenwirkt.

Gemäß einer Weiterbildung ist der Kühlmittelaustritt derart angeordnet, dass ein aus dem Düsenkörper austretender Kühlmittelstrahl auf eine Spanfläche eines an dem Sitz angeordneten Schneideinsatzes gerichtet ist. In diesem Fall wird eine besonders effiziente Kühlung des Drehwerkzeugs und der bearbeiteten Oberfläche des Werkstücks bereitgestellt.

Gemäß einer Weiterbildung ist zwischen einer Außenumfangsfläche des Schaftbereichs und einer Innenumfangsfläche der Bohrung ein ringförmiges Dichtungselement angeordnet. In diesem Fall wird zuverlässig ein unerwünschtes seitliches Austreten des Kühlmittels verhindert und das Dichtungselement ist dabei zuverlässig gegen Beschädigung geschützt. Das Dichtungselement kann z.B. durch einen in einer umlaufenden Nut angeordneten O-Ring gebildet sein. Wenn das Dichtungselement auf einer von dem Düsenaustrittsbereich abgewandten Seite der Ausnehmung angeordnet ist, dann ist der Befestigungsmechanismus für den Düsenkörper auch durch das Dichtungselement zuverlässig gegen Verschmutzung und gegen Kontakt mit dem Kühlmittel geschützt.

Es ist an dem Bearbeitungsabschnitt seitlich des Sitzes zumindest ein weiterer Kühlmittelaustritt mit einer sich von der Oberfläche erstreckenden Bohrung ausgebildet. Bevorzugt kann der weitere Kühlmittelaustritt im Wesentlichen identisch zu dem ersten Kühlmittelaustritt ausgebildet sein. Durch das Vorsehen des weiteren Kühlmittelaustritts kann eine besonders effiziente Kühlung der Schneide dadurch erfolgen, dass zwei Kühlmittelstrahlen spanflächenseitig zugeführt werden. Ferner ermöglicht der weitere Kühlmittelaustritt, dass z.B. anstelle des ersten Kühlmittelaustritts nur über den weiteren Kühlmittelaustritt und einen dort angeordneten Düsenkörper ein Kühlmittelstrahl in den Bereich der Schneide zugeführt wird. In diesem Fall kann z.B. die Bohrung des ersten Kühlmittelaustritts durch einen Blindstopfen verschlossen werden. Dies kann insbesondere dann vorteilhaft sein, wenn die Anordnung des Düsenkörpers in der Bohrung des ersten Kühlmittelaustritts den Spanabfluss behindern würde oder die Drehbearbeitung in anderer Weise räumlich behindern würde.

Der erste Kühlmittelaustritt und der weitere Kühlmittelaustritt sind derart ausgebildet, dass der Düsenkörper wahlweise in die Bohrung des ersten Kühlmittelaustritts oder in die Bohrung des weiteren Kühlmittelaustritts einsetzbar ist. Somit kann der gleiche Düsenkörper sowohl an dem ersten Kühlmittelaustritt als auch an dem weiteren Kühlmittelaustritt zum Einsatz kommen und es kann gegebenenfalls derselbe Blindstopfen Verwendung finden, um wahlweise die Bohrung des ersten Kühlmittelaustritts oder die Bohrung des weiteren Kühlmittelaustritts zu verschließen.

Gemäß einer Weiterbildung ist der in dem Düsenkörper ausgebildete Kühlmittelkanal frei von abrupten Querschnittsänderungen. In diesem Fall ist ein starker Druckfall des Kühlmittels über den Düsenkörper zuverlässig verhindert und der Kühlmittelstrahl kann mit hohem Druck zu dem Bereich der Schneide zugeführt werden. Ferner kann eine unerwünschte Entmischung des Kühlmittels verhindert werden, was insbesondere in dem Fall einer sogenannten Minimalmengenschmierung (MMS) besonders vorteilhaft ist.

Gemäß einer Weiterbildung erstreckt sich der Kühlmittelkanal räumlich gekrümmt durch den Düsenkörper. Der Kühlmittelkanal kann sich dabei insbesondere bogenförmig, ohne abrupte Richtungsänderungen durch den Düsenkörper erstrecken. In diesem Fall werden ein unerwünscht hoher Druckabfall und die Gefahr einer Entmischung des Kühlmittels besonders zuverlässig vermieden.

Gemäß einer Weiterbildung ist der Düsenkörper aus einem anderen Material als der Rest des Drehwerkzeug-Halters ausgebildet. Bevorzugt kann der Düsenkörper aus einem härteren und verschleißbeständigeren Material, wie z.B. Hartmetall (cemented carbide) gebildet sein. In diesem Fall wird erreicht, dass der Düsenkörper auch bei einem Kontakt mit z.B. ablaufenden Spänen nicht so schnell verschleißt.

Das Drehwerkzeug-System weist zumindest einen Blindstopfen auf, der anstelle des Düsenkörpers in die Bohrung einsetzbar ist, um diese fluiddicht zu verschließen. Durch das Vorsehen des zusätzlichen Blindstopfens kann der erste Kühlmittelaustritt zuverlässig verschlossen werden und, falls vorgesehen, stattdessen ein anderer Kühlmittelaustritt verwendet werden, wenn die Anordnung des Düsenkörpers in der Bohrung des ersten Kühlmittelaustritts die beabsichtigte Drehbearbeitung behindern würde.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische perspektivische Ansicht eines Drehwerkzeug-Halters gemäß einer Ausführungsform mit einem montierten Düsenkörper und einem montierten Blindstopfen;
- Fig. 2:: eine schematische Seitenansicht des Bearbeitungsabschnitts bei dem Drehwerkzeug-Halter aus Fig. 1;
- Fig. 3:: eine schematische perspektive Darstellung des Düsenkörpers;
- Fig. 4:: eine schematische Seitenansicht des Düsenkörpers;
- Fig. 5:: eine schematische Aufsicht auf den Bearbeitungsabschnitt bei dem Drehwerkzeug-Halter aus Fig. 1;
- Fig. 6:: eine vergrößerte Detaildarstellung eines Schnitts entlang C-C in Fig. 5;
- Fig. 7:: eine schematische perspektivische Darstellung des Blindstopfens;
- Fig. 8:: eine schematische Seitenansicht des Blindstopfens ohne Dichtungselement;
- Fig. 9:: eine vergrößerte Detaildarstellung eines Schnitts entlang B-B in Fig. 5;
- Fig. 10:: eine vergrößerte Detaildarstellung eines Schnitts entlang D-D durch den Blindstopfen in Fig. 5;
- Fig. 11:: eine schematische perspektivische Darstellung des Drehwerkzeug-Halters mit zwei montierten Düsenkörpern; und
- Fig. 12:: eine schematische Aufsicht auf den Drehwerkzeug-Halter ohne Düsenkörper und ohne Blindstopfen.

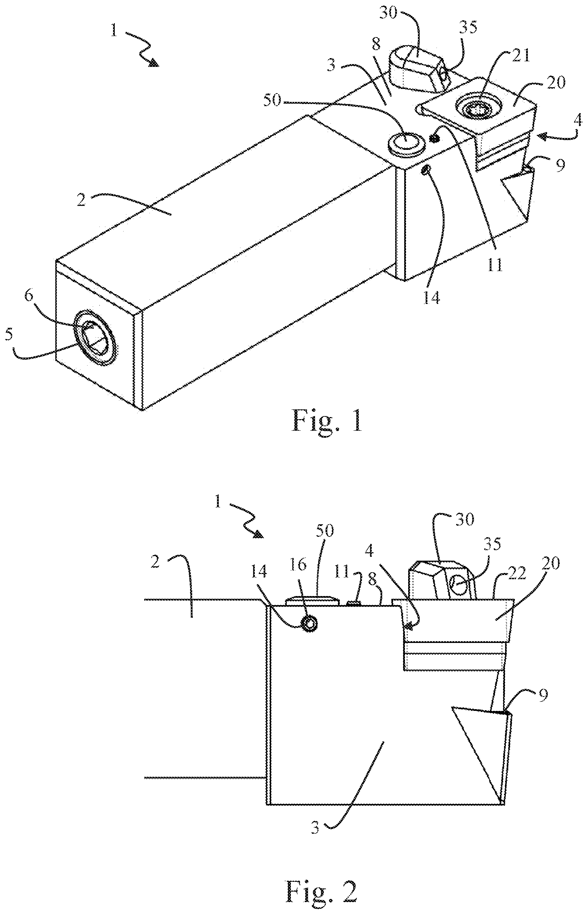

Eine Ausführungsform des Drehwerkzeug-Halters 1 wird im Folgenden unter Bezugnahme auf die Fig. 1 bis Fig. 12 beschrieben. Bei dem konkret dargestellten Beispiel ist der Drehwerkzeug-Halter 1 als ein sogenannter Monoblock-Halter ausgebildet, es ist jedoch zu beachten, dass der Drehwerkzeug-Halter 1 auch andere Ausgestaltungen erhalten kann.

Der Drehwerkzeug-Halter 1 weist einen Einspannabschnitt 2 zum Einspannen an einer Werkzeugaufnahme einer Bearbeitungsmaschine und einen einstückig bzw. monolithisch mit dem Einspannabschnitt 2 ausgebildeten Bearbeitungsabschnitt 3 auf, an dem ein Sitz 4 zur Aufnahme eines auswechselbaren Schneideinsatzes 20 ausgebildet ist. Der Drehwerkzeug-Halter 1 kann z.B. aus Stahl oder einem relativ zähen Hartmetall gebildet sein. Obwohl bei dem konkreten Beispiel eine Realisierung gezeigt ist, bei der der Sitz 4 so ausgebildet ist, dass der Schneideinsatz 20 über eine Befestigungsschraube 21 an dem Sitz 4 befestigt ist, sind auch andere übliche Ausgestaltungen, wie z.B. eine Befestigung über eine Klemmpratze oder ähnliches möglich.

Die mit dem zu zerspanenden Material in Eingriff gelangende Schneide 22 ist in an sich bekannter Weise an dem Schneideinsatz 20 ausgebildet. Der Schneideinsatz 20 ist aus einem harten und verschleißbeständigen Material gefertigt und kann insbesondere aus Hartmetall (cemented carbide), Cermet oder einer Schneidkeramik ausgebildet sein. Der Schneideinsatz 20 kann dabei insbesondere als Wendeschneidplatte ausgebildet sein, die eine Mehrzahl von nacheinander einsetzbaren Schneidenbereichen aufweist.

Der Drehwerkzeug-Halter 1 hat eine innere Kühlmittelführung, die dazu ausgebildet ist, Kühlmittel durch das Innere des Drehwerkzeug-Halters 1 zu dem Bearbeitungsabschnitt 3 zuzuführen. Die innere Kühlmittelführung hat zumindest einen ersten Kühlmitteleintritt 5, über den Kühlmittel in die innere Kühlmittelführung zugeführt werden kann. Obwohl bei der dargestellten Ausführungsform lediglich ein Kühlmitteleintritt 5 dargestellt ist, der an einer Stirnseite des Einspannabschnittes 2 ausgebildet ist, kann der Drehwerkzeug-Halter 1 bevorzugt eine Mehrzahl von alternativ verwendbaren Kühlmitteleintritten 5 aufweisen, die jeweils mit der inneren Kühlmittelführung kommunizierend verbunden sind. Die jeweils konkret nicht benötigten Kühlmitteleintritte können mit einem Verschlusselement 6 verschlossen werden, wie dies in Fig. 1 beispielhaft für den ersten Kühlmitteleintritt 5 dargestellt ist.

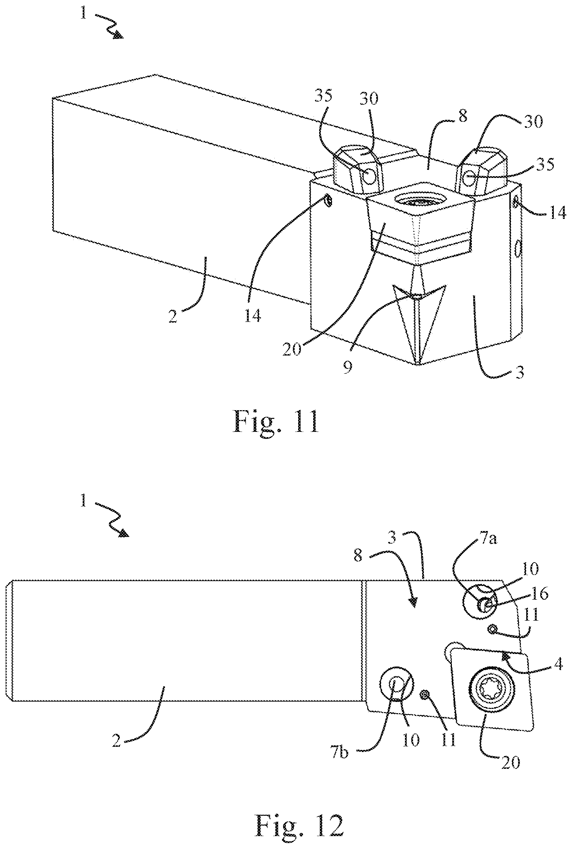

Wie insbesondere in den Fig. 11 und Fig. 12 zu sehen ist, weist der Drehwerkzeug-Halter 1 bei dem konkret dargestellten Beispiel einen ersten Kühlmittelaustritt 7a und einen weiteren Kühlmittelaustritt 7b auf, die jeweils an einer oberen Oberfläche 8 des Bearbeitungsabschnitts 3 seitlich von dem Sitz 4 ausgebildet sind. Sowohl der erste Kühlmittelaustritt 7a als auch der zweite Kühlmittelaustritt 7b sind bei der Ausführungsform dazu ausgebildet, Kühlmittel zu einer Spanfläche des auswechselbaren Schneideinsatzes 20 zuzuführen.

Wie insbesondere in den Fig. 1, Fig. 2 und Fig. 11 zu sehen ist, ist bei der Ausführungsform ferner ein dritter Kühlmittelaustritt 9 ausgebildet, der ebenfalls mit der inneren Kühlmittelführung in Fluidverbindung steht und über den Kühlmittel zu einer Freifläche des Schneideinsatzes 20 zugeführt werden kann.

Da der erste Kühlmittelaustritt 7a und der weitere Kühlmittelaustritt 7b abgesehen von ihrer räumlichen Position im Wesentlichen identisch zueinander ausgebildet sind, wird im Folgenden nur der erste Kühlmittelaustritt 7a eingehender beschrieben und die Beschreibung gilt gleichermaßen für den weiteren Kühlmittelaustritt 7b.

Der erste Kühlmittelaustritt 7a hat eine Bohrung 10, die sich ausgehend von der Oberfläche 8 des Bearbeitungsabschnitts 3 in das Material des Drehwerkzeug-Halters 1 erstreckt und über die innere Kühlmittelführung in Fluidverbindung mit dem ersten Kühlmitteleintritt 5 und gegebenenfalls weiteren Kühlmitteleintritten (sofern vorhanden) steht. Die Bohrung 10 ist bei der Ausführungsform als eine zylindrische Bohrung ausgebildet, deren Längsachse sich senkrecht zu der Oberfläche 8 erstreckt. Bei der Ausführungsform ist die Bohrung 10 insbesondere mit einer glatten Wandung versehen.

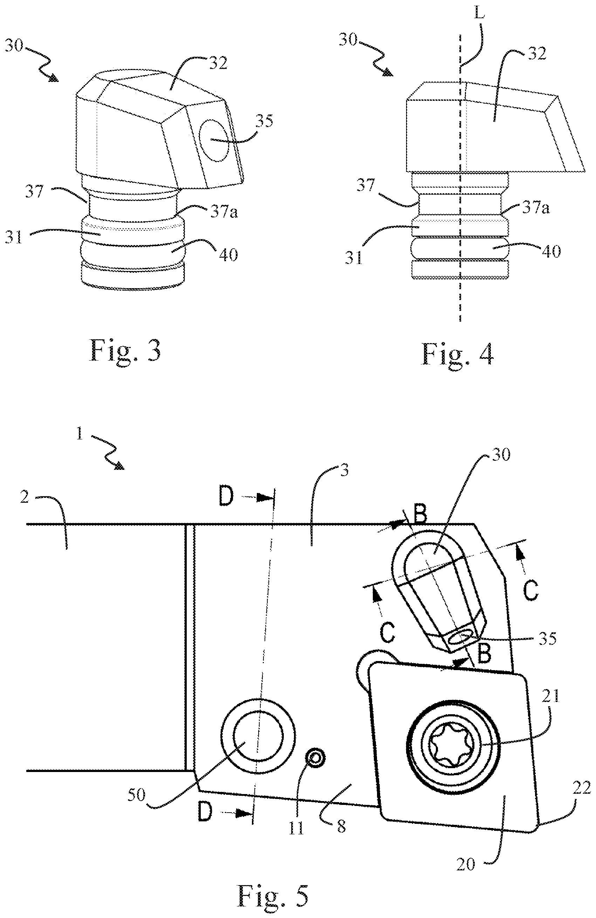

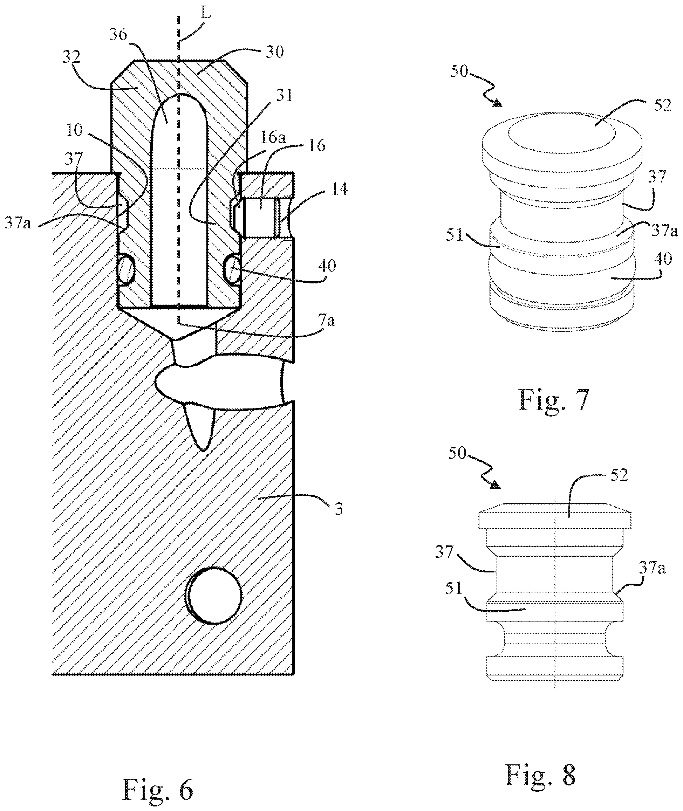

Wie insbesondere in den Fig. 6, Fig. 9 und Fig. 11 zu sehen ist, ist in der Bohrung 10 des ersten Kühlmittelaustritts 7a ein auswechselbarer Düsenkörper 30 eingesetzt, der im Folgenden eingehender beschrieben wird. Der Düsenkörper 30 kann bevorzugt aus einem anderen Material als der Rest des Drehwerkzeug-Halters ausgebildet sein, insbesondere aus einem härteren und verschleißbeständigeren Material. Z.B. kann der Düsenkörper 30 aus Hartmetall ausgebildet sein. In diesem Fall ist er besonders beständig gegenüber einem durch ablaufende Späne bedingten Verschleiß. Der Düsenkörper 30 ist in den Fig. 3 und Fig. 4 ferner auch noch einzeln dargestellt. Der Düsenkörper 30 ist einstückig bzw. monolithisch ausgebildet und hat einen Schaftbereich 31, der derart ausgebildet ist, dass er in die Bohrung 10 eingeführt werden kann, und einen abgewinkelt dazu ausgebildeten Düsenaustrittsbereich 32. Der Schaftbereich 31 ist rotationssymmetrisch bezüglich einer Längsachse L ausgebildet, die in Fig. 4 schematisch dargestellt ist. Bei der konkret dargestellten Ausführungsform ist an dem Außenumfang des Schaftbereichs eine ringförmig umlaufende Vertiefung ausgebildet, in der ein ringförmiges Dichtungselement 40 angeordnet ist. Bei der dargestellten Ausgestaltung ist das ringförmige Dichtungselement 40 als ein O-Ring aus Gummi realisiert. Der Schaftbereich 31 und das ringförmige Dichtungselement 40 sind so bemessen, dass der Schaftbereich 31 in die Bohrung 10 eingeführt werden kann und das ringförmige Dichtungselement 40 dabei dichtend zwischen der Außenumfangsfläche des Schaftbereichs 31 und der Innenumfangsfläche der Bohrung 10 angeordnet wird. In dieser Weise verhindert das ringförmige Dichtungselement 40 einen unerwünschten Kühlmitteldurchtritt zwischen der Außenumfangsfläche des Schaftbereichs 31 und der Innenumfangsfläche der Bohrung 10.

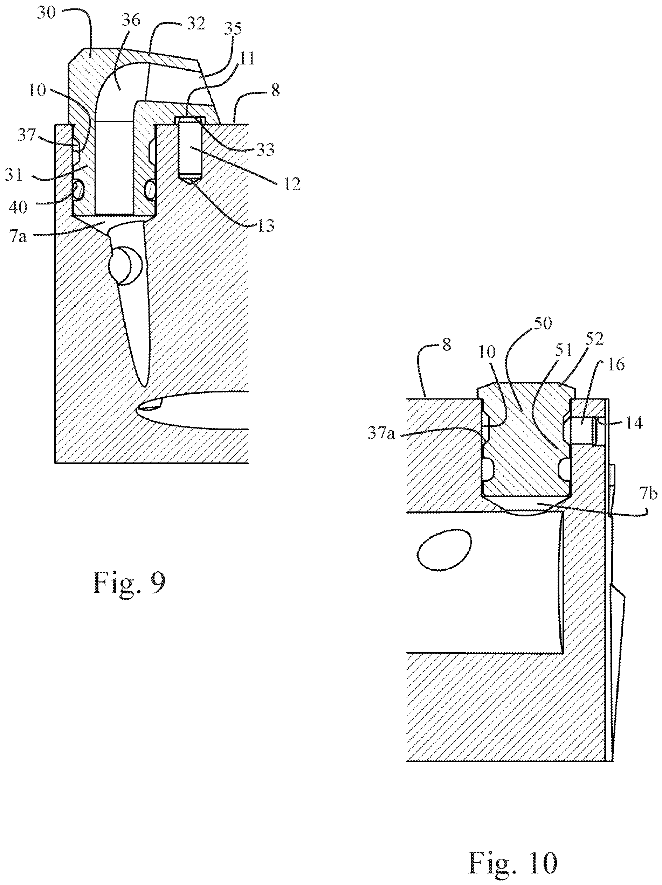

Der abgewinkelte Düsenaustrittsbereich 32 des Düsenkörpers 30 ist derart ausgerichtet, dass eine Unterseite des Düsenaustrittsbereichs 32 auf der Oberfläche 8 des Bearbeitungsabschnitts 3 aufliegt, wenn der Schaftbereich 31 in die Bohrung 10 eingeführt ist. Um den Düsenkörper 30 in seiner Ausrichtung festzulegen und ein Verdrehen des Düsenkörpers 30 um die Längsachse L zu verhindern, ist an der Oberfläche 8 des Bearbeitungsabschnittes 3 ein erstes Verdrehsicherungselement 11 angeordnet, das mit einem zweiten Verdrehsicherungselement 33 zusammenwirkt, das an der Unterseite des Düsenaustrittsbereichs 32 angeordnet ist. Bei dem in den Zeichnungen dargestellten Ausführungsbeispiel ist das zweite Verdrehsicherungselement 33 als eine Vertiefung in der Unterseite des Düsenaustrittsbereichs 32 ausgebildet und das erste Verdrehsicherungselement 11 als ein in diese eingreifender Vorsprung, wie insbesondere in Fig. 9 zu sehen ist. Dies ist in besonders einfacher und kostengünstiger Weise zu realisieren. Es ist jedoch auch eine umgekehrte Ausgestaltung möglich, bei der das erste Verdrehsicherungselement 11 als eine Vertiefung ausgebildet ist und das zweite Verdrehsicherungselement 33 als ein Vorsprung. Bei dem dargestellten Beispiel ist das erste Verdrehsicherungselement 11 durch einen Stift 12 gebildet, der in eine sich von der Oberfläche 8 des Bearbeitungsabschnittes 3 aus erstreckende Bohrung 13 eingesetzt ist, was eine besonders kostengünstige Realisierung ermöglicht. Der Stift 12 kann z.B. in eine glattwandige Bohrung 13 eingepresst sein oder der Stift 12 kann mit einem Außengewinde versehen sein, das mit einem entsprechenden Innengewinde in der Bohrung 13 zusammenwirkt.

Der Düsenkörper 30 weist an dem Düsenaustrittsbereich 32 eine Austrittsöffnung 35 für einen Kühlmittelstrahl auf, die über das Zusammenwirken des ersten Verdrehsicherungselements 11 und des zweiten Verdrehsicherungselements 33 derart ausgerichtet ist, dass der Kühlmittelstrahl auf eine Spanfläche eines an dem Sitz 4 angeordneten Schneideinsatzes 20 gerichtet ist. Wie insbesondere in den Fig. 6 und Fig. 9 zu sehen ist, erstreckt sich durch den Schaftbereich 31 und den dazu abgewinkelten Düsenaustrittsbereich 32 ein innerer Kühlmittelkanal 36, der dazu ausgebildet ist, Kühlmittel von der inneren Kühlmittelführung zu der Austrittsöffnung 35 zu leiten. Der innere Kühlmittelkanal 36 erstreckt sich dabei räumlich gekrümmt durch den Düsenkörper 30 und ist frei von abrupten Querschnittsänderungen, sodass das Kühlmittel in dem Düsenkörper 30 sanft in Richtung der Austrittsöffnung 35 umgelenkt wird. In dem Schaftbereich 31 erstreckt sich der innere Kühlmittelkanal 36 im Wesentlichen parallel und koaxial zu der Längsachse L.

Die Befestigung des Düsenkörpers 30 in der Bohrung 10 wird im Folgenden unter Bezugnahme auf die Fig. 3, Fig. 4 und Fig. 6 näher beschrieben.

Wie in den Fig. 3 und Fig. 4 zu sehen ist, ist der Schaftbereich 31 des Düsenkörpers 30 mit einer Ausnehmung 37 versehen. Die Ausnehmung 37 ist bei dem Ausführungsbeispiel als eine ringförmig an dem Schaftbereich 31 umlaufende Rille ausgebildet. Bei dem dargestellten Beispiel läuft die Rille insbesondere koaxial zu der Längsachse L ringförmig um, was eine besonders einfache und kostengünstige Fertigung ermöglicht. Die Ausnehmung 37 hat ferner ein im Wesentlichen trapezförmiges Querschnittsprofil, wie in Fig. 4 und in Fig. 6 zu sehen ist. Wie insbesondere in Fig. 6 zu erkennen ist, ist in dem Bearbeitungsabschnitt 3 des Drehwerkzeug-Halters 1 eine mit der Bohrung 10 kommunizierend verbundene Querbohrung 14 ausgebildet. Die Querbohrung 14 erstreckt sich quer zu der Bohrung 10 und folglich auch quer zu der Längsachse L des Schaftbereichs 31. Insbesondere kann sich die Querbohrung 14 senkrecht zu der Längsachse L erstrecken. Die Querbohrung 14 ist bei dem Ausführungsbeispiel als eine Gewindebohrung mit einem Innengewinde ausgebildet und erstreckt sich bis zu einer Seitenfläche des Bearbeitungsabschnitts 3.

In der Querbohrung 14 ist ein Klemmelement 16 angeordnet, das dazu ausgebildet ist, in die Ausnehmung 37 an dem Schaftbereich 31 einzugreifen, um den Düsenkörper 30 an dem Bearbeitungsabschnitt 3 zu befestigen. Das Klemmelement 16 ist mit einem Außengewinde versehen, das mit dem Innengewinde in der Querbohrung 14 zusammenwirkt. Eine von der Bohrung 10 abgewandte Seite des Klemmelements 16 ist mit einer Eingriffsstruktur für ein Schraubwerkzeug versehen, über die das Klemmelement 16 mit einem Schraubwerkzeug betätigt werden kann, das von der Seitenfläche des Bearbeitungsabschnitts 3 in die Querbohrung eingeführt wird. Die Eingriffsstruktur kann z.B. als Schlitz für einen Schlitzschraubendreher, als ein Kreuzschlitz, als ein Innensechskant oder Ähnliches ausgebildet sein. Das Klemmelement 16 ist bei der konkret dargestellten Ausführungsform als eine Madenschraube ausgebildet.

Wie in Fig. 6 zu sehen ist, hat die Ausnehmung 37 an dem Schaftbereich 31 des Düsenkörpers 30 eine schräg zu der Längsachse L des Schaftbereichs 31 verlaufende Klemmfläche 37a, die durch das trapezartige Querschnittsprofil der Ausnehmung 37 bedingt ist. Die Klemmfläche 37a ist dabei derart schräg ausgerichtet, dass sie sich mit zunehmendem Abstand von dem Düsenaustrittsbereich 32 von der Längsachse L entfernt, sich der Außenumfang des Schaftbereichs 31 mit zunehmendem Abstand von dem Düsenaustrittsbereich 32 also aufweitet. Die der Bohrung 10 zugewandte Stirnseite des Klemmelements 16 ist seitlich angeschrägt bzw. angefast, sodass eine ebenfalls schräg zu der Längsachse L verlaufende Haltefläche 16a ausgebildet ist. Der Außenumfang des Klemmelements 16 verjüngt sich somit in Richtung der Bohrung 10. Die Position der Ausnehmung 37 an dem Schaftbereich 31 und die Position der Querbohrung 14 sind so aufeinander abgestimmt, dass die Haltefläche 16a des Klemmelements 16 keilförmig nach dem Prinzip der schiefen Ebene derart auf die Klemmfläche 37a der Ausnehmung 37 einwirkt, dass der Düsenkörper 30 in die Bohrung 10 gezogen wird, wenn das Klemmelement 16 in die Querbohrung 14 eingeschraubt wird. In dieser Weise wird der Düsenkörper 30 gegen die Oberfläche 8 des Bearbeitungsabschnitts 3 gespannt, wodurch auch das erste Verdrehsicherungselement 11 und das zweite Verdrehsicherungselement 33 in formschlüssigem Eingriff gehalten werden.

Die Ausnehmung 37 ist an dem Schaftbereich 31 zwischen dem Düsenaustrittsbereich 32 und dem ringförmigen Dichtungselement 40 angeordnet, sodass der durch das Klemmelement 16 und die Ausnehmung 37 gebildete Klemmmechanismus gegenüber dem Kühlmittel geschützt angeordnet ist.

Der weitere Kühlmittelaustritt 7b ist entsprechend zu dem ersten Kühlmittelaustritt 7a ausgeführt. Es sind folglich ebenfalls eine Bohrung 10 und eine Querbohrung 14 mit einem Klemmelement 16 vorgesehen und es ist an der Oberfläche 8 des Bearbeitungsabschnittes 3 auch dort ein erstes Verdrehsicherungselement 11 vorgesehen.

Aufgrund der entsprechenden Ausgestaltung des ersten Kühlmittelaustritts 7a und des weiteren Kühlmittelaustritts 7b kann der Düsenkörper 30 wahlweise in die Bohrung 10 des ersten Kühlmittelaustritts 7a oder in die Bohrung 10 des weiteren Kühlmittelaustritts 7b eingesetzt werden. Ferner ist es z.B. möglich, sowohl in die Bohrung 10 des ersten Kühlmittelaustritts 7a als auch in die Bohrung 10 des zweiten Kühlmittelaustritts 7b jeweils einen Düsenkörper 30 einzusetzen, wie es z.B. in Fig. 11 dargestellt ist. Wenn nur ein Düsenkörper 30 Verwendung finden soll, was z.B. der Fall sein kann, wenn die Anordnung eines Düsenkörpers 30 in der Bohrung 10 des ersten Kühlmittelaustritts 7a oder in der Bohrung 10 des weiteren Kühlmittelaustritts 7b bei der Drehbearbeitung räumlich störend wirken würde, so können die Bohrung 10 des ersten Kühlmittelaustritts 7a oder die Bohrung 10 des weiteren Kühlmittelaustritts 7b mit einem Blindstopfen 50 verschlossen werden, der im Folgenden noch beschrieben wird. In den Fig. 1, Fig. 2, Fig. 5 und Fig. 10 ist jeweils eine Situation dargestellt, bei der der weitere Kühlmittelaustritt 7b mittels eines Blindstopfens 50 fluiddicht verschlossen ist.

Wenn weder der erste Kühlmittelaustritt 7a noch der zweite Kühlmittelaustritt 7b verwendet werden soll, können auch beide mit jeweiligen Blindstopfen 50 verschlossen werden.

Der Blindstopfen 50 ist in Fig. 8 in einer Seitenansicht ohne ein ringförmiges Dichtungselement 40 dargestellt, in Fig. 7 in einer perspektivischen Ansicht mit einem daran angeordneten ringförmigem Dichtungselement 40. Der Blindstopfen 50 weist einen Schaftbereich 51 auf, dessen Außenumfangsfläche im Wesentlichen identisch zu dem Schaftbereich 31 des Düsenkörpers 30 ausgebildet ist, wie in den Fig. 7 und Fig. 8 zu sehen ist. In Fig. 10 ist zur Vereinfachung das ringförmige Dichtungselement 40 nicht dargestellt. Der Schaftbereich 51 des Blindstopfens hat eine Ausnehmung 37 mit einer Klemmfläche 37a und eine umlaufende Vertiefung in der das ringförmige Dichtungselement 40 aufgenommen ist. Anstelle des Düsenaustrittsbereichs 32 bei dem Düsenkörper 30 hat der Blindstopfen 50 einen flachen Deckelbereich 52, der einen etwas größeren Querschnitt als die Bohrung 10 hat und der derart flach ausgebildet ist, dass er nicht stark von Oberfläche 8 des Bearbeitungsabschnitts 3 hervorsteht, wenn der Schaftabschnitt 51 in der Bohrung 10 aufgenommen ist.

Aufgrund der im Wesentlichen identischen Ausgestaltung des Schaftbereichs 51 des Blindstopfens 50 zu dem Schaftbereich 31 des Düsenkörpers 30 kann der Blindstopfen 50 in derselben Weise mit dem Klemmelement 16 in der Bohrung 10 des ersten Kühlmittelaustritts 7a und in der Bohrung des zweiten Kühlmittelaustritts 7b befestigt werden, wie es zuvor für den Düsenkörper 30 beschrieben wurde.

## Patentansprüche

1. Drehwerkzeug-System mit einem Drehwerkzeug-Halter (1), wobei der Drehwerkzeug-Halter (1) hat:
einen Einspannabschnitt (2) zur Verbindung mit einer Werkzeugaufnahme einer Bearbeitungsmaschine und
einen Bearbeitungsabschnitt (3) mit einem Sitz (4) zur Aufnahme eines auswechselbaren Schneideinsatzes (20),
wobei in dem Drehwerkzeug-Halter (1) eine innere Kühlmittelführung zum Zuführen von Kühlmittel zu dem Bearbeitungsabschnitt (3) ausgebildet ist, die zumindest einen ersten Kühlmitteleintritt (5) und zumindest einen seitlich des Sitzes (4) an dem Bearbeitungsabschnitt (3) angeordneten ersten Kühlmittelaustritt (7a) aufweist,
wobei der erste Kühlmittelaustritt (7a) eine seitlich des Sitzes (4) angeordnete, sich von einer Oberfläche (8) des Bearbeitungsabschnittes (3) erstreckende Bohrung (10) aufweist, in der ein auswechselbarer Düsenkörper (30) eingesetzt ist, der einen in die Bohrung (10) eingesetzten Schaftbereich (31) und einen abgewinkelt dazu ausgebildeten, an der Oberfläche (8) des Bearbeitungsabschnittes (3) angeordneten Düsenaustrittsbereich (32) hat,
wobei sich durch den Schaftbereich (31) und den dazu abgewinkelten Düsenaustrittsbereich (32) ein innerer Kühlmittelkanal (36) erstreckt,
**dadurch gekennzeichnet, dass**
der Schaftbereich (31) an einer Außenumfangsfläche eine Ausnehmung (37) aufweist, in die ein in dem Drehwerkzeug-Halter (1) angeordnetes, quer zu einer Längsachse (L) des Schaftbereichs (31) angeordnetes Klemmelement (16) eingreift, mit dem der Düsenkörper (30) an dem Drehwerkzeug-Halter (1) befestigt ist;
an dem Bearbeitungsabschnitt (3) seitlich des Sitzes (4) zumindest ein weiterer Kühlmittelaustritt (7b) mit einer sich von der Oberfläche (8) erstreckenden Bohrung (10) ausgebildet ist,
der erste Kühlmittelaustritt (7a) und der weitere Kühlmittelaustritt (7b) derart ausgebildet sind, dass der Düsenkörper (30) wahlweise in die Bohrung (10) des ersten Kühlmittelaustritts (7a) oder in die Bohrung (10) des weiteren Kühlmittelaustritts (7b) einsetzbar ist,
und das Drehwerkzeug-System zumindest einen Blindstopfen (50) hat, der anstelle des Düsenkörpers (30) in die Bohrung (10) des ersten Kühlmittelaustritts (7a) oder in die Bohrung des weiteren Kühlmittelaustritts (7b) einsetzbar ist, um diese fluiddicht zu verschließen.

2. Drehwerkzeug-System nach Anspruch 1, wobei das Klemmelement (16) in einer mit der Bohrung (10) kommunizierend verbundenen Querbohrung (14) angeordnet ist.

3. Drehwerkzeug-System nach Anspruch 2, wobei die Querbohrung (14) eine Gewindebohrung mit einem Innengewinde ist, das mit einem Außengewinde an dem Klemmelement (16) zusammenwirkt.

4. Drehwerkzeug-System nach einem der Ansprüche 1 bis 3, wobei die Ausnehmung (37) eine ringförmig an dem Schaftbereich (31) umlaufende Rille ist.

5. Drehwerkzeug-System nach einem der vorangehenden Ansprüche, wobei die Ausnehmung (37) eine schräg zu einer Längsachse (L) des Schaftbereichs (31) verlaufende Klemmfläche (37a) aufweist, auf die eine Haltefläche (16a) des Klemmelements (16) keilförmig einwirkt, sodass der Düsenkörper (30) gegen die Oberfläche (8) des Bearbeitungsabschnittes (3) gespannt ist.

6. Drehwerkzeug-System nach einem der vorangehenden Ansprüche, wobei an der Oberfläche (8) des Bearbeitungsabschnittes (3) ein erstes Verdrehsicherungselement (11) angeordnet ist, das mit einem zweiten Verdrehsicherungselement (33) an einer Unterseite des Düsenaustrittsbereichs (32) zum Verhindern einer Drehung des Düsenkörpers (30) um eine Längsachse (L) des Schaftbereichs (31) zusammenwirkt.

7. Drehwerkzeug-System nach Anspruch 6, wobei das erste Verdrehsicherungselement (11) ein Vorsprung ist und das zweite Verdrehsicherung (33) eine Vertiefung in der Unterseite des Düsenaustrittsbereichs (32).

8. Drehwerkzeug-System nach einem der vorangehenden Ansprüche, wobei der erste Kühlmittelaustritt (7a) derart angeordnet ist, dass ein aus dem Düsenkörper (30) austretender Kühlmittelstrahl auf eine Spanfläche eines an dem Sitz (4) angeordneten Schneideinsatzes (20) gerichtet ist.

9. Drehwerkzeug-System nach einem der vorangehenden Ansprüche, wobei zwischen einer Außenumfangsfläche des Schaftbereichs (31) und einer Innenumfangsfläche der Bohrung (10) ein ringförmiges Dichtungselement (40) angeordnet ist.

10. Drehwerkzeug-System nach Anspruch 9, wobei das Dichtungselement (40) auf einer von dem Düsenaustrittsbereich (32) abgewandten Seite der Ausnehmung (37) angeordnet ist.

11. Drehwerkzeug-System nach einem der vorangehenden Ansprüche, wobei der in dem Düsenkörper (30) ausgebildete Kühlmittelkanal (36) frei von abrupten Querschnittsänderungen ist.

12. Drehwerkzeug-System nach einem der vorangehenden Ansprüche, wobei sich der Kühlmittelkanal (36) räumlich gekrümmt durch den Düsenkörper (30) erstreckt.

13. Drehwerkzeug-System nach einem der vorangehenden Ansprüche, wobei der Düsenkörper (30) aus einem anderen Material als der Rest des Drehwerkzeug-Halters (1) ausgebildet ist.

## Claims

1. A turning tool system having a turning tool holder (1), the turning tool holder (1) having
a clamping portion (2) for connection to a tool fitting of a machine tool and a machining portion (3) having a seat (4) for receiving an interchangable cutting insert (20),
wherein formed in the turning tool holder (1) is an internal coolant guide for supplying coolant to the machining portion (3), which coolant guide has at least one first coolant inlet (5) and at least one first coolant outlet (7a) arranged at the side of the seat (4) on the machining portion (3),
wherein the first coolant outlet (7a) has a bore (10) which is arranged at the side of the seat (4) and extends from a surface (8) of the machining portion (3), and in which is inserted an interchangable nozzle body (30), which has a shank region (31) inserted into the bore (10) and a nozzle outlet region (32) which is formed at an angle to said shank region and is arranged on the surface (8) of the machining portion (3),
wherein an internal coolant channel (36) extends through the shank region (31) and the nozzle outlet region (32) that is at an angle to said shank region,
**characterized in that**
the shank region (31) has on an outer circumferential surface a recess (37), into which a clamping element (16) arranged in the turning tool holder (1) and arranged transverse to a longitudinal axis (L) of the shank region (31) engages, by means of which clamping element the nozzle body (30) is fastened to the turning tool holder (1),
at least one further coolant outlet (7b) with a bore (10) extending from the surface (8) is formed on the machining portion (3) at the side of the seat (4),
the first coolant outlet (7a) and the further coolant outlet (7b) are formed in such a way that the nozzle body (30) can be inserted selectively into the bore (10) of the first coolant outlet (7a) or into the bore (10) of the further coolant outlet (7b), and
the turning tool system has at least one blind plug (50), which can be inserted into the bore (10) of the first coolant outlet (7a) or into the bore of the further coolant outlet (7b) instead of the nozzle body (30) in order to close said bore in a fluid-tight manner.

2. The turning tool system as claimed in claim 1, wherein the clamping element (16) is arranged in a transverse bore (14) which is connected to the bore (10) in a communicating manner.

3. The turning tool system as claimed in claim 2, wherein the transverse bore (14) is a threaded bore with an internal thread which interacts with an external thread on the clamping element (16).

4. The turning tool system as claimed in one of claims 1 to 3, wherein the recess (37) is a groove which encircles the shank region (31) in an annular manner.

5. The turning tool system as claimed in one of the preceding claims,
wherein the recess (37) has a clamping surface (37a) which runs obliquely with respect to a longitudinal axis (L) of the shank region (31) and on which a holding surface (16a) of the clamping element (16) acts in a wedge-shaped manner, with the result that the nozzle body (30) is clamped against the surface (8) of the machining portion (3).

6. The turning tool system as claimed in one of the preceding claims,
wherein arranged on the surface (8) of the machining portion (3) is a first rotation-prevention element (11), which interacts with a second rotation-prevention element (33) on a bottom side of the nozzle outlet region (32) for the purpose of preventing rotation of the nozzle body (30) about a longitudinal axis (L) of the shank region (31).

7. The turning tool system as claimed in claim 6, wherein the first rotation-prevention element (11) is a projection and the second rotation-prevention means (33) is a depression in the bottom side of the nozzle outlet region (32).

8. The turning tool system as claimed in one of the preceding claims,
wherein the first coolant outlet (7a) is arranged in such a way that a coolant jet emerging from the nozzle body (30) is directed onto a rake face of a cutting insert (20) arranged on the seat (4).

9. The turning tool system as claimed in one of the preceding claims,
wherein an annular sealing element (40) is arranged between an outer circumferential surface of the shank region (31) and an inner circumferential surface of the bore (10).

10. The turning tool system as claimed in claim 9, wherein the sealing element (40) is arranged on a side of the recess (37) that faces away from the nozzle outlet region (32).

11. The turning tool system as claimed in one of the preceding claims,
wherein the coolant channel (36) formed in the nozzle body (30) is free of abrupt changes in cross section.

12. The turning tool system as claimed in one of the preceding claims,
wherein the coolant channel (36) extends in a spatially curved manner through the nozzle body (30).

13. The turning tool system as claimed in one of the preceding claims,
wherein the nozzle body (30) is formed from a different material than the remainder of the turning tool holder (1).

## Revendications

1. Système d'outil de tournage comportant un support d'outil de tournage (1), le support d'outil de tournage (1) ayant :
une partie de serrage (2) servant à la liaison à un logement d'outil d'une machine d'usinage et
une partie d'usinage (3) comportant un siège (4) servant au logement d'un insert de coupe (20) interchangeable, un guide de réfrigérant servant à l'acheminement de réfrigérant jusqu'à la partie d'usinage (3) étant réalisé dans le support d'outil de tournage (1), lequel guide présente au moins une première entrée de réfrigérant (5) et au moins une première sortie de réfrigérant (7a) disposée latéralement par rapport au siège (4) sur la partie d'usinage (3),
la première sortie de réfrigérant (7a) présentant un alésage (10) disposé latéralement par rapport au siège (4), s'étendant à partir d'une surface (8) de la partie d'usinage (3), alésage dans lequel est inséré un corps de buse (30) interchangeable qui a une région tige (31) insérée dans l'alésage (10) et une région de sortie de buse (32) réalisée de manière inclinée par rapport à celle-ci, disposée sur la surface (8) de la partie d'usinage (3),
un canal de réfrigérant intérieur (36) s'étendant à travers la région tige (31) et la région de sortie de buse (32) inclinée par rapport à celle-ci, **caractérisé en ce que**
la région tige (31) présente, sur une surface périphérique extérieure, un évidement (37) dans lequel vient en prise un élément de serrage (16) disposé dans le support d'outil de tournage (1), disposé transversalement par rapport à un axe longitudinal (L) de la région tige (31), élément de serrage à l'aide duquel le corps de buse (30) est fixé au support d'outil de tournage (1) ;
au moins une autre sortie de réfrigérant (7b) comportant un alésage (10) s'étendant à partir de la surface (8) est réalisée sur la partie d'usinage (3) latéralement par rapport au siège (4),
la première sortie de réfrigérant (7a) et l'autre sortie de réfrigérant (7b) sont réalisées de telle sorte que le corps de buse (30) peut être inséré sélectivement dans l'alésage (10) de la première sortie de réfrigérant (7a) ou dans l'alésage (10) de l'autre sortie de réfrigérant (7b),
et le système d'outil de tournage a au moins un bouchon borgne (50)qui peut être inséré au lieu du corps de buse (30) dans l'alésage (10) de la première sortie de réfrigérant (7a) ou dans l'alésage de l'autre sortie de réfrigérant (7b), afin de fermer ceux-ci de manière étanche aux fluides.

2. Système d'outil de tournage selon la revendication 1, l'élément de serrage (16) étant disposé dans un alésage transversal (14) relié de manière communicante à l'alésage (10).

3. Système d'outil de tournage selon la revendication 2, l'alésage transversal (14) étant un alésage fileté comportant un filetage intérieur qui coopère avec un filetage extérieur sur l'élément de serrage (16).

4. Système d'outil de tournage selon l'une des revendications 1 à 3, l'évidement (37) étant une rainure entourant de manière annulaire la région tige (31).

5. Système d'outil de tournage selon l'une des revendications précédentes, l'évidement (37) présentant une surface de serrage (37a) s'étendant de manière oblique par rapport à un axe longitudinal (L) de la région tige (31), surface sur laquelle agit en forme de coin une surface de retenue (16a) de l'élément de serrage (16), de sorte que le corps de buse (30) soit serré contre la surface (8) de la partie d'usinage (3).

6. Système d'outil de tournage selon l'une des revendications précédentes, un premier élément de fixation antirotation (11) étant disposé sur la surface (8) de la partie d'usinage (3), lequel coopère avec un deuxième élément de fixation antirotation (33) sur un côté inférieur de la région de sortie de buse (32) pour empêcher une rotation du corps de buse (30) autour d'un axe longitudinal (L) de la région tige (31).

7. Système d'outil de tournage selon la revendication 6, le premier élément de fixation antirotation (11) étant une saillie et la deuxième fixation antirotation (33) étant un renfoncement dans le côté inférieur de la région de sortie de buse (32).

8. Système d'outil de tournage selon l'une des revendications précédentes, la première sortie de réfrigérant (7a) étant disposée de telle sorte qu'un jet de réfrigérant sortant du corps de buse (30) est orienté vers une face de coupe d'un insert de coupe (20) disposé sur le siège (4).

9. Système d'outil de tournage selon l'une des revendications précédentes, un élément d'étanchéité annulaire (40) étant disposé entre une surface périphérique extérieure de la région tige (31) et une surface périphérique intérieure de l'alésage (10).

10. Système d'outil de tournage selon la revendication 9, l'élément d'étanchéité (40) étant disposé sur un côté de l'évidement (37) opposé à la région de sortie de buse (32).

11. Système d'outil de tournage selon l'une des revendications précédentes, le canal de réfrigérant (36) réalisé dans le corps de buse (30) étant dépourvu de changements abrupts de section transversale.

12. Système d'outil de tournage selon l'une des revendications précédentes, le canal de réfrigérant (36) s'étendant de manière incurvée spatialement à travers le corps de buse (30).

13. Système d'outil de tournage selon l'une des revendications précédentes, le corps de buse (30) étant réalisé à partir d'un autre matériau que le reste du support d'outil de tournage (1).
